# EUROPEAN PATENT APPLICATION

(11) **EP 1 708 100 A2**
(43) Date of publication of application: **04.10.2006**
(21) Application number: 05254572.0
(22) Date of filing: 22.07.2005
(51) Int. Cl.: G06F 17/30

(54) **Electronic manual display apparatus**

(30) Priority: 29.03.2005 JP 2005096203
(71) Applicant: FUJITSU LIMITED, Kawasaki-shi, Kanagawa 211-8588 (JP)
(72) Inventor: Hidesawa, Shigeru, c/o Fujitsu Limited, Kawasaki-shi, Kanagawa 211-8588 (JP); Nakamura, Kazuhiko, c/o Fujitsu Prime Software, Nagoya-shi, Aichi 461-0004 (JP)
(74) Representative: Fenlon, Christine Lesley

(57) **Abstract**

A contents table display unit displays, as a table of contents, titles for respective items written in the electronic manual made up of document data in which itemized texts are written. A bookmarker display unit displays a marker indicating a relationship of bookmarker information onto a title for an item to which the bookmarker information is related among titles displayed as the table of contents.

## Description

The present invention relates to a data management technique and in particular to a technique for using a bookmarker for an electronic manual made up of document data.

There have conventionally been a large number of techniques proposed to speed up the search for subsequent data by attaching a marker to the data once found from among a vast amount thereof, just like inserting a bookmarker between pages of a book.

For example, a Japanese patent laid-open application publication No. 2002- 278375 has disclosed a technique to display immediately an already bookmarked screen on a lower hierarchical layer when operating a bookmarker selection button attached to the screen on an upper hierarchical layer among a plurality of screens with a hierarchical structure, skipping screens on the intermediary layers.

For another example, a Japanese patent laid-open application publication No. 2003- 281141 has disclosed a technique in which a selection of discretionary character strings within a Web page in the WWW (World Wide Web) system creates bookmarker information with the character string being related with the URL (uniform resource locator) of the Web page so that a selection of the bookmarker information later displays the Web page according to the related URL and searches for the existing position of the character string automatically at the same time, thereby scrolling the display of the Web page down to the applicable position.

For yet another example, a Japanese patent laid-open application publication No. 2004-287559 has disclosed a technique to create an electronic bookmarker for a part of an image extracted from a displayed image that is related to title and memo parts.

For further example, a Japanese patent laid-open application publication No. 05-342270 has disclosed a technique to enable a lumped-together editing of every purpose by attaching a purpose-specific bookmarker, such as delete, print and display, to each page in an image filing apparatus.

For yet further example, a Japanese patent laid-open application publication No. 08- 249155 has disclosed a technique to make a menu screen for a data file managed by a hierarchical structure, a form simulating a book for indicating an upper hierarchical layer of a data file shown by an icon in each page by using a tag attached to the left side of the book.

For a final example herein, a Japanese patent laid-open application publication No. 04- 51337 has disclosed a technique to display related information according to an instruction from a user by furnishing an area for writing the related information corresponding to a user usable object.

Incidentally, in a manual such as operational description for a various kinds of equipment, itemized texts are written with each item being attached by a title for briefly showing the description content and a table of contents is provided on the beginning pages putting together these titles. Such is a common style. And these items in a manual are generally formed in a hierarchical structure, with a series of items on a lower layer lumped together by an item on the higher layer describing mutually related contents. There is no difference from the aforementioned practice for an electronic manual made up of document data.

A use of above described bookmarker function for an electronic manual is certainly convenient for referring to the description of the item previously found out. In order to search for a description in an item related with the aforementioned item in the manual, it is necessary to display, sequentially one after another, a preceding page and/or a following page of the bookmarked page where the description was first found. Such has been an inconvenience.

Preferred embodiments of the present invention seek to improve a convenience of bookmarker function for use in an electronic manual.

An electronic manual display apparatus as one of aspects of the present invention, being an apparatus for displaying an electronic manual made up of document data in which itemized texts are written, comprises contents table display means for displaying titles for respective items in the electronic manual as a table of contents, and a bookmarker display means for displaying a marker indicating a relationship of bookmarker information onto a title for an item to which the bookmarker information is related among titles displayed as the table of contents.

Since a table of contents lists titles for the related items close to one another, a display of marker onto a title in the table of contents for indicating the fact ofbookmarkerinformation being attached thereto, as the above described comprisal, enables a quick recognition of an existence of the item being attached by a bookmarker, hence improving a convenience of the bookmarker function.

Note that a display method for an electronic manual used in the above described electronic manual display apparatus according to an embodiment of the present invention also gains the same working effect as the electronic manual display apparatus, hence advantageously accomplishing improved convenience of the bookmarker function. Meanwhile, a computer readable storage medium storing a program for making a computer execute the electronic manual display method may advantageously achieve the same working effect as the electronic manual display apparatus by making the computer read the program out of the storage medium to execute it, hence accomplishing the above described purpose.

For a better understanding of the present invention, and to show how the same may be carried into effect, reference will now be made, by way of example to the accompanying drawings, in which:
Fig. 1 shows the fundamental comprisal of electronic manual display apparatus as an embodiment of the present invention;
Fig. 2 shows a hardware comprisal of electronic manual display apparatus as an embodiment of the present invention;
Fig. 3 exemplifiesascreenforanelectronicmanual display screen;
Fig. 4 exemplifies a data structure of electronic manual data file;
Fig. 5 exemplifies a data structure of bookmarker data file;
Fig. 6 is a flow chart showing a processing content of manual initial display processing;
Fig. 7 exemplifies a display of a table of contents;
Fig. 8 is a flow chart showing a processing content of manual display processing;
Fig. 9 is a flow chart showing a processing content of hierarchical layer display open-close processing;
Fig. 10 exemplifies a screen in a state of closing entire tree display of a table of contents;
Fig. 11 is a flow chart showing a processing content of bookmarker registration processing;
Fig. 12 exemplifies a display of pull-down menu for operating instruction about a bookmarker;
Fig. 13 exemplifies a screen for a bookmarker registration screen;
Fig. 14 is a flow chart showing a processing content of comment display processing;
Fig. 15 exemplifies a screen for a comment display;
Fig. 16 is a flow chart showing a processing content of bookmarker deletion processing;
Fig. 17 exemplifies a screen for a "my manual";
Fig. 18 shows a content of change for displaying "mymanual" vis-a-vis the "mymanual" display processing; and
Fig. 19 exemplifies a storage medium allowing a computer reading the stored program.

### Description of the Preferred Embodiments

The following is a detailed description of the preferred embodiment of the present invention while referring to the accompanying drawings.

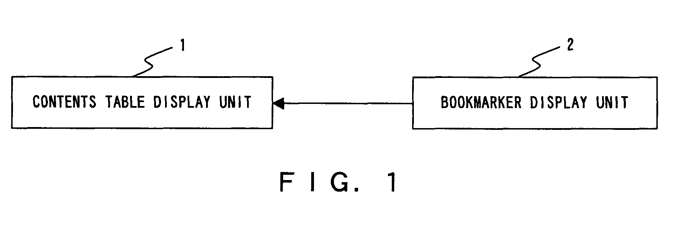

The first description is about Fig. 1 which shows the fundamental comprisal of an electronicmanual display apparatus as an embodiment of the present invention.

In Fig. 1, a contents table display unit 1 displays a title for each item, as a table of contents, in an electronic manual made up of document data in which itemized texts are written.

A bookmarker display unit 2 displays a marker indicating a relationship of bookmarker information onto a title for an item to which the bookmarker information is related among titles displayed by the contents table display unit 1 as the table of contents.

Since a table of contents lists the titles for the related respective items close to one another, a display of marker onto a title in the table of contents for indicating the fact of bookmarker information being attached thereto, as the above described comprisal, enables a quick recognition of an existence of the item being attached by a bookmarker, hence improving a convenience of the bookmarker function.

Incidentally, the electronic manual display apparatus may be configured so that the contents table display unit 1 further displays a hierarchical relationship among each title displayed as a table of contents based on the hierarchical structure among the above described respective items predefined for the electronic manual.

This configuration enables an easy understanding of the positioning of each item written in a manual.

Incidentally, a configuration may be such that the bookmarker display unit 2 displays the above described bookmarker also to a title of an upper layer item in a hierarchical structure among the titles displayed as a table of contents, if an item on a lower layer of the hierarchical structure is related by bookmarker information.

This configuration enables a grasp of existence of bookmarker information just by referring to a title on an upper hierarchical layer among a table of contents.

Incidentally, here, a configuration may be such that the bookmarker display unit 2 displays one type of marker for a title for an upper layer item in a hierarchical structure while another type of marker for a title for an item on a lower layer in the hierarchical structure.

This configuration enables a quick understanding of the whether there exists bookmarker information either about an item corresponding to the title or about an item on a lower hierarchical layer, just by referring to the title on an upper hierarchical layer among a table of contents.

Meanwhile, the electronic manual display apparatus shown by Fig. 1 may be configured to include a document data in bookmarker information for indicating a comment so that the bookmarker display unit 2 displays the comment together with a display of table of contents.

This configuration enables writing of a comment in the middle of a manual as with the one on a paper medium.

Also, the electronic manual display apparatus shown by Fig. 1 may comprise a contents table change display unit displaying only a title attached by the above described marker among the titles in accordance with an instruction for changing a display of titles as a table of contents.

This configuration enables a glance of a list of titles for the item attached by bookmarker information, hence making it convenient.

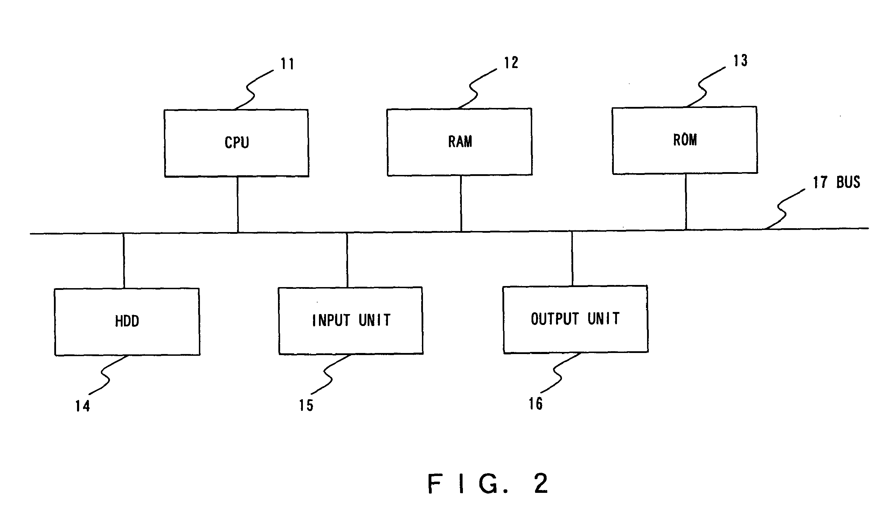

The next description is about Fig. 2 which shows a hardware comprisal of electronic manual display apparatus as an embodiment of the present invention.

In Fig. 2, a CPU 11, RAM 12, ROM 13, HDD 14 , input unit 15 and output unit 16 are all interconnected by a bus 17, enabling exchanges of various data mutually under the management of the CPU 11.

The CPU (central processing unit) 11 is the central processing apparatus for carrying out an operation control of the entirety of the electronic manual display apparatus shown by Fig. 2.

The RAM (random access memory) 12 is used for a work memory when the CPU 11 executes various control programs and also as the main memory used for temporary storage area of various data on required basis.

The ROM (read only memory) 13 is a memory for pre-storing a basic control program to be executed by the CPU 11, and the basic control for the operation of whole electronic manual display apparatus is carried out by the CPU 11 executing the basic control program at a startup of the electronic manual display apparatus.

The HDD (hard disk drive, i.e., hard disk storage apparatus) 14 is a storage apparatus storing a control program executed by the CPU 11 and also used for storing later described various data.

The input unit 15 is used for receiving an external input and handing out the input content to the CPU 11. The input unit 15 comprises input apparatuses, such as key board and mouse, for receiving an instruction from the user and also comprises a read-out apparatus for a portable storage media such as an FD (flexible disk), CD-ROM (compact disk-ROM), DVD-ROM (digital versatile disk- ROM), MO (magneto optical) disk, et cetera, on an as-required basis. An electronic manual made up of document data is supplied by such storage media, for example, will be read out thereof and stored in the HDD 14 on as required basis.

The output unit 16 is disposed for outputting in compliance to an instruction from the CPU 11 by comprising a display apparatus such as a CRT (cathode ray tube), LCD (liquid crystal display), et cetera, for displaying various data, and in addition, a printer apparatus for displaying various data by way of printing, et cetera, on an as-required basis.

As described above, the electronic manual display apparatus is configured just as most common computers. Therefore, the electronic manual display apparatus can also be configured by such commonly configured computers.

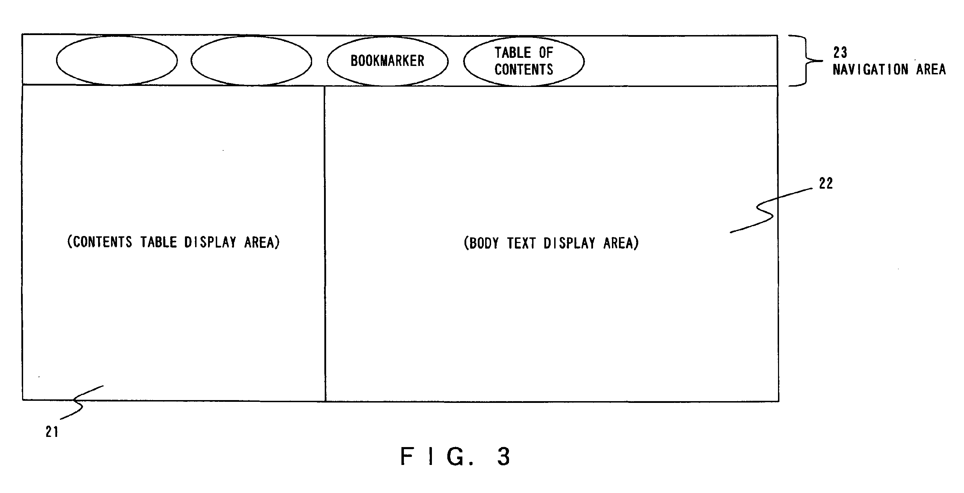

The next description is about Fig. 3 which exemplifies a screen for an electronic manual display screen to be displayed by the output unit 16. The example screen comprises a content table display area 21 for displaying a title for each item, as a table of contents, of electronic manual in which itemized texts are written, a body text display area 22 for displaying a text for each item of the electronic manual, and a navigation area 23 in which icons such as "bookmarker," "table of contents" are laid out. Incidentally, the icons laid out in the navigation area 23 can be pressed for operation by the user of the electronic manual display apparatus operating such as a mouse comprised by the input unit 15.

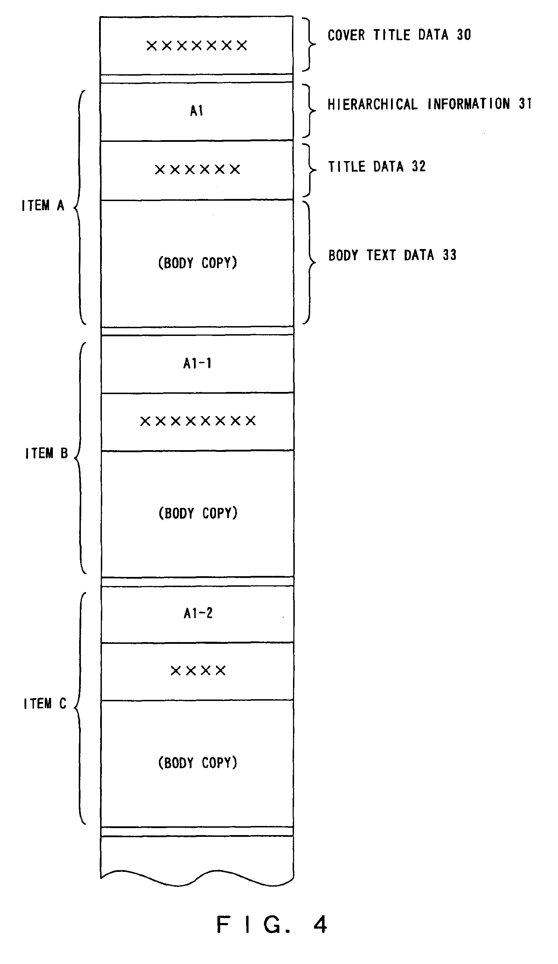

The next description is about Fig. 4 which exemplifies a data structure of an electronic manual data file that is the substance of an electronic manual whose content is displayed in the electronic manual display apparatus shown by Fig. 1.

As shown by Fig. 4, the top area of the data file allocates the storage area for cover title 30 which is a character string data expressing the cover title of the electronic manual, followed by allocating the data storage area for each item, i.e., item A, item B, item C and so on, in an orderly fashion, with each itemoccupying the respective storage areas, i.e., hierarchical information 31, title data 32 and body text data 33.

The hierarchical information 31 indicates the hierarchical layer on which the applicable item is located in the hierarchical structure among each item predefined at the time of making the manual.

For example, in the example of the hierarchical information 31 shown by Fig. 4, the item A is located on an upper hierarchical layer "A1"; and the item B is located on the layer "A1-1", which is on a lower layer than the layer "A1" for the above described item A. And the item C is located on the layer "A1-2" which is on a lower layer than the layer "A1" for the above described item A and on the same layer as the layer "A1-1" for the above described item B.

As such, the hierarchical information 31 indicates a hierarchical relationship by the number of dashes (i. e. , "-").

Incidentally, the hierarchical information 31 can also be used for a paragraph number (e.g., the numbers for chapter, clause, paragraph, et cetera).

Meanwhile, the title data 32 is a character string data expressing the title assigned to the item, and the body text data 33 is also a character string data expressing the body text of the item.

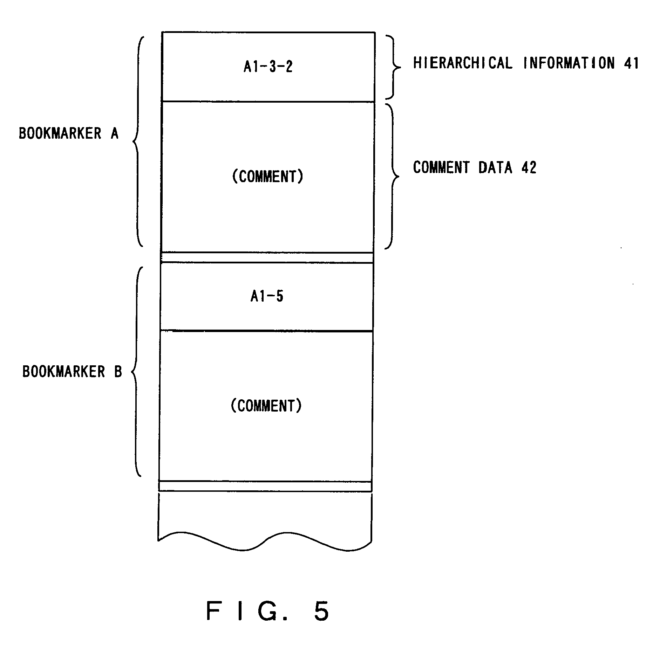

The next description is about Fig. 5 which exemplifies a data structure of bookmarker data file created and edited by the CPU 11 comprised by the electronic manual display apparatus shown by Fig. 1 executing a later described processing. Note that the bookmarker data file is stored and retained by the HDD 14.

As shown by Fig. 5, the bookmarker data file lays out the data storage areas for each bookmarker, i.e., bookmarkers A, B and so on in an orderly fashion, with each bookmarker being assigned by hierarchical information 41 and comment data 42.

Among them, the storage area for the hierarchical information 41 stores the hierarchical information 31 which has been defined for the item attached with the bookmarker in the electronic manual data file shown by Fig. 4. Accordingly, the example shown by Fig. 5 indicates the fact that a bookmarker is attached to each of the item "A1-3-2" and item "A1-5".

The comment data 42 is a document data indicating a comment and, specifically, a character string data for indicating a comment text annotated on the bookmarker as a result of later described processing.

The following description is about a variety of control processing carried out by the CPU 11 comprised by the electronic manual display apparatus shown by Fig. 1. Note that this processing is accomplished by making the CPU 11 read a prescribed control program pre-stored by the HDD 14 and execute it.

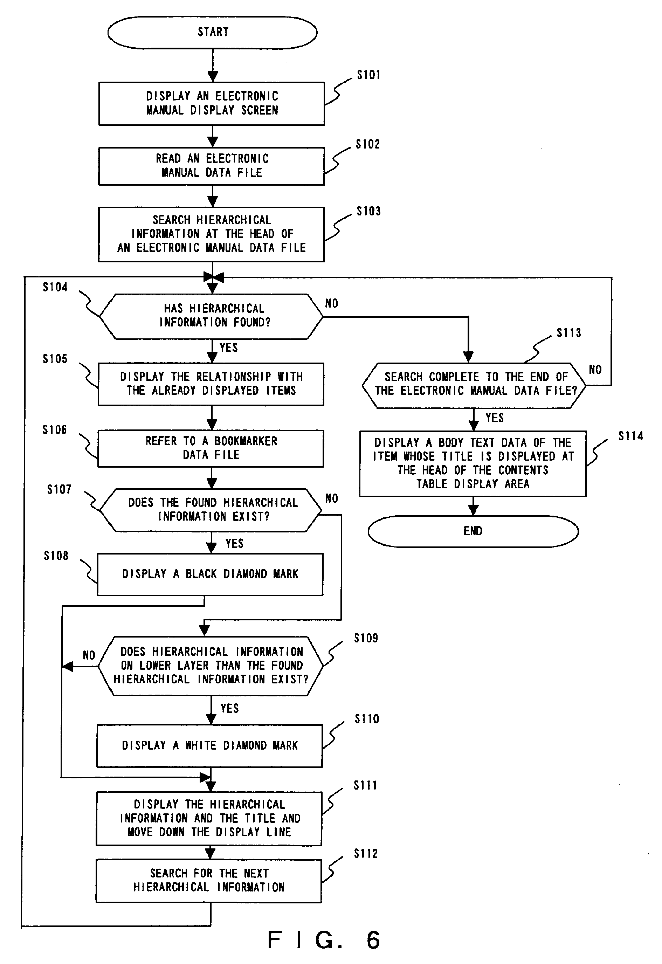

The first description is about Fig. 6 which shows a flow chart describing a processing content of manual initial display processing. This is a processing for making the output unit 16 carry out an initial display of electronic manual through the electronic manual display screen exemplified by Fig. 3, which is started by the CPU 11 obtaining an instruction inputted by the input unit 15 for starting display of an electronic manual.

In Fig. 6, the first process is to have the output unit 16 display an electronic manual display screen as exemplified by Fig. 3 (S101).

The above is followed by processing of reading and obtaining an electronic manual data file, having the data structure shown by Fig. 4, which has been inputted from the input unit 15 (or stored by the HDD 14) (S102).

The next processing is to search for the hierarchical information 31 at the head of storage area for the obtained electronic manual data file (S103).

The processing of ensuing steps S104 through S113 is to have the content table display area 21 of the electronic manual display screen display a table of contents.

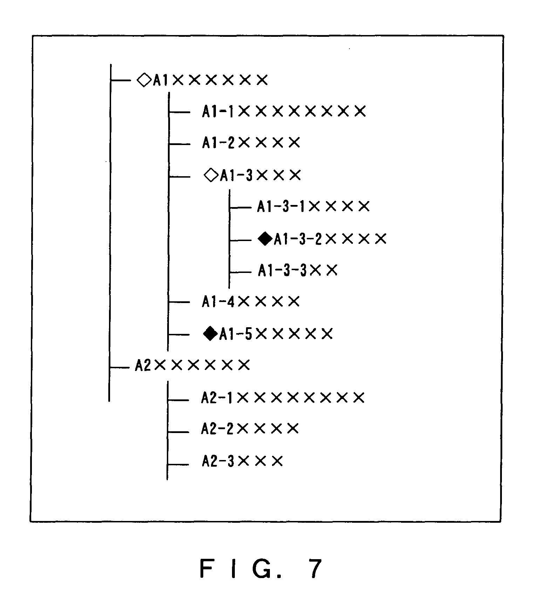

Here, the description turns to Fig. 7 which exemplifies a display of a table of contents displayed in the content table display area 21.

The display of a table of contents is for displaying the title for each item of an electronic manual, in which a mutual relationship among each title is hierarchically shown by a tree structure based on a hierarchical structure among each item predefined for the electronic manual.

Back to Fig. 7, let it define that the letters such as "A1", "A1-1" and "A1-2" are the hierarchical information 31 predefined for the data of each item in the electronic manual data file; and that these x (eks) marks shown on the right side of the hierarchical information 31 are, collectively for each line as shown in the drawing, the title for the item expressed by the title data 32 in the data for each item of the electronic manual data file.

Further defined that a black diamond mark is attached to the title for each of the items "Al-3-2" and "A1-5" among each title displayed as a table of contents shown by Fig. 7. This mark is to indicate that these items are respectively attached by bookmarkers, that is, the bookmarker information stored in the bookmarker data file is related to each of these items.

Since a table of contents lists the titles for related items close to one another, a display of such a mark makes it possible to recognize the existence of these related items attached with the bookmarkers, hence improving a convenience of the bookmarker function.

Furthermore, a white diamond mark, which is a different pattern from the above described black diamond mark, is attached to each of the titles for items "A1" and "A1-3" among each title displayed as the table of contents in Fig. 7. This is the mark for displaying the title for an item on the upper layer in the hierarchical structure among the titles displayed as a table of contents if a bookmarker is attached (i.e., bookmarker information is related thereto) to an item on the lower layer in the hierarchical structure defined for each item of an electronic manual.

A display of such marks enables a quick recognition of existence of bookmarker information just by referring to the titles on an upper layer in a table of contents.

Note that every one cycle of later described processing from S105 through S111 which is to be repeatedly carried out as shown in Fig. 6 will result in displaying one line across the row in a display of table of contents exemplified by Fig. 7.

Let it go back to Fig. 6 for describing the processing in S104 and thereafter.

Now the processing is to judge whether or not the previous search processing has found hierarchical information 31 from the electronic manual data file (S104) and, if judged to have found some(i.e., "yes" for the judgment), the processing proceeds to S105, while the processing proceeds to S113 if judged to have not yet found.

The next processing is to display the hierarchical structure between an item having hierarchical information 31 and an item associated with a title already displayed in the content table display area 21 by the processing carried out up to the current point in time, based on the found hierarchical information 31 (S105).

In the display of a table of contents exemplified by Fig. 7, a line shown on the left to the hierarchical information 31 is the line for indicating the hierarchical relationship between the respective items which is displayed by the processing of S105. These lines indicate, for example, the items "A1-1", "A1-2", "A1-3", "A1-4" and "A1-5" are located on the lower layer of the item "A-1", among which the items "A1-3-1", "A1-3-2" and "A1-3-3" are located on the lower layer of the item "A1-3"; while the item "A2" is located on the same layer as the item "A1".

The processing of S105 displays a sideways character "T" (i.e., a form of lying character "T") at the head of the horizontal line as exemplified by the item "A1" shown by Fig.7 if nothing is shown so far in the content table display area 21. On the other hand, if an item on the upper layer is already displayed in the content table display area 21 as with the item "A1-1", displays a line of lying T, with a rightward horizontal indention, on the left side of the hierarchical information 31 to be displayed by the ensuing processing.

Furthermore, if an item displayed immediately before is on the same layer, as with the items "A1-2" and "A1-3" (i.e., item "A1-1" in the example of Fig. 7), the processing displays a sideways T on the left side of the hierarchical information 31 (or the bookmarker thereof) by indenting as the item displayed immediately before so as to connect with the line displayed therefore.

In the meantime, if an item on the same layer has been displayed in the content table display area 21 before the immediate past as with the item "A1-4" for example, the processing indents the lines of respective items located on the lower layer (i.e., the items "A1-3-1", "A1-3-2" and "A1-3-3" in the example shown by Fig. 7) which are related to the item on the aforementioned same layer (i.e., the item "A1-3" in the example shown by Fig. 7) further rightward horizontally and displays a sideways T on the left side of the hierarchical information 31 with the same indentation as the item on the same layer, followed by connecting the sideways T with the item on the same layer by a straight line.

The processing then is to refer to the bookmarker data file exemplified by Fig. 5 (S106), followed by judging whether or not the same information as hierarchical information 31 judged to have been found in the electronic manual data file as a result of the processing of above described S104 exists in the bookmarker data file as hierarchical information 41 (S107). Here, if the judgment is "exists" (i.e., the judgment result is "yes"), display a black diamond mark (S108), followed by proceeding to the processing of S111.

On the other hand, if the processing of S107 judges that the above described hierarchical information 41 does not exist in the bookmarker data file (i.e., the judgment result is "no"), then the processing is to judge whether or not hierarchical information 41 indicating a lower layer than the one indicated by the hierarchical information 31 which has been judged to have been found in the electronic manual data file by the above described processing of S104 exists in the bookmarker data file (S109) and, if only judged to exist (i.e., the judgment result is "yes"), the processing is to display the above described white diamond mark (S110).

The next processing is to display the hierarchical information 31 judged to have been found in the electronic manual data file and the title of the item indicated by the title data 32 for the aforementioned hierarchical information 31 (S111), the displayed line of which will be moved down in a later processing.

Then the processing is to search for next hierarchical information 31 in the storage area of the electronic manual data file obtained by the processing of S102 (S112), followed by going back to S104 for repeating the above described processing.

Incidentally, if hierarchical information 31 is judged to have not been found in the electronic manual data file in the judgment of S104, the processing is to judge whether or not a search for hierarchical information 31 is complete to the end of the electronic manual data file (S113) and, if the search is judged to be complete (i.e., "yes" for the judgment), proceed to the processing of S114. While if the search is not complete (i.e., "no" for the judgment), then go back to the S104 for repeating the above described processing.

The ensuing processing is to read the body text data 33 related to the item whose title is displayed at the head of a table of contents displayed in the content table display area 21 by all the above described processing out of the electronic manual data file and the body text of the aforementioned item in the body text display area 22 of the electronic manual display screen (S114), and then the manual initial display processing ends.

The above described processing is the manual initial display processing which is carried by the CPU 11, thereby displaying a table of content as exemplified by Fig. 7 in the content table display area 21 of the electronic manual display screen as exemplified by Fig. 3.

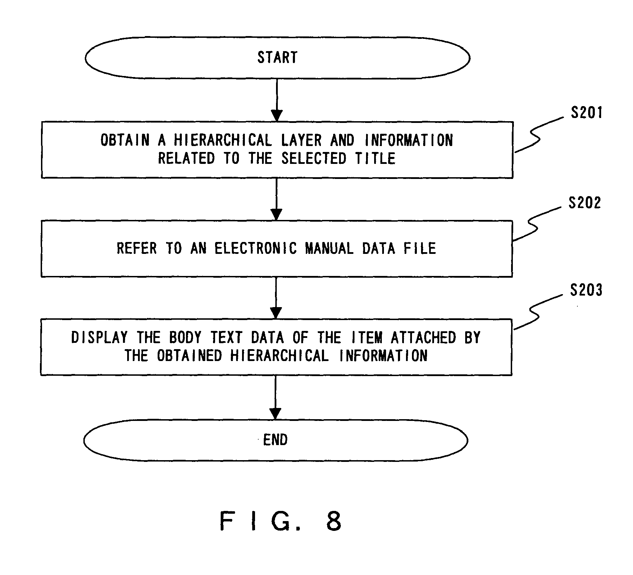

The next description is about Fig. 8 which shows a flow chart describing a processing content of manual display processing. This is a processing to have the output unit 16 display the body text of an item according to an instruction from the user of the electronic manual display apparatus by switching body text display from the one which the output unit 16 is carrying out the initial display of electronic manual by the electronic manual display screen exemplified by Fig. 3 as a result of executing the manual initial display processing.

The processing of Fig. 8 is started by the user operating a mouse, et cetera, comprised by the input unit 15 to select one of the titles displayed as a table of contents in the content table display area 21 by double-clicking the title for example.

The first processing is to obtain hierarchical information 31 displayed with the title selected as described above from the display of the content table display area 21 (S201).

Then, the processing is to refer to an electronic manual data file (S202). The subsequent processing is to read the body text data 33 of an item attached by the hierarchical information 31 obtained by the processing of the previous step out of the electronic manual data file and have the body text display area 22 of the electronic manual display screen display the body text of the aforementioned item (S203). Then, the manual display processing ends.

The above described processing is the manual display processing which is carried out by the CPU 11 to display the body text of an item according to an instruction from the user by using the electronic manual display screen as exemplified by Fig. 3.

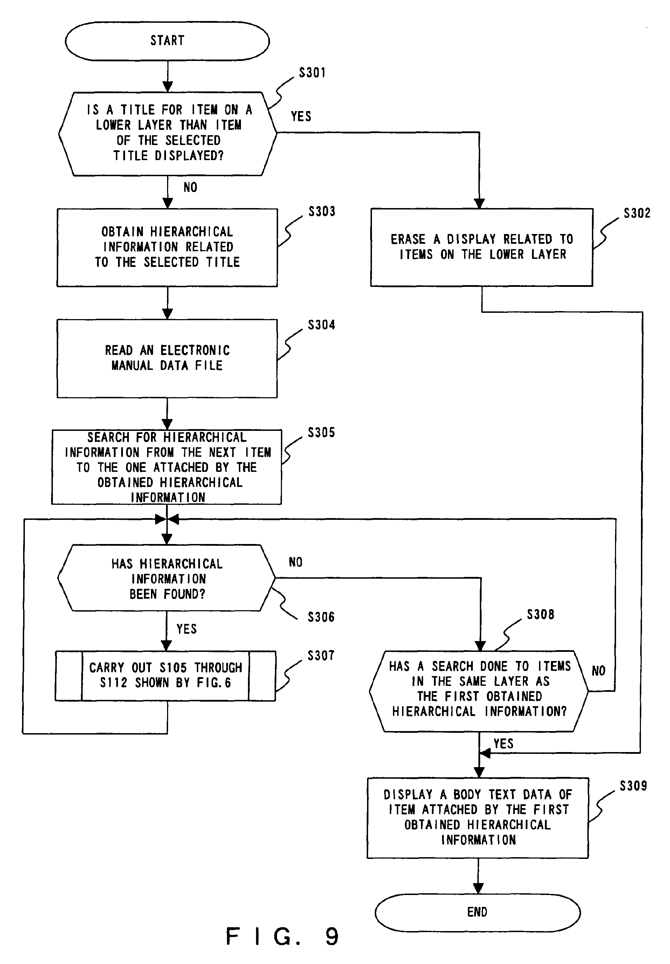

The next description is about Fig. 9 which shows a flow chart describing a processing content of hierarchical layerdisplayopen-closeprocessing. This processing is for erasing a display of title for an item on the lower layer (N. B. : this operation will be called "close a tree" hereinafter), or restore-displaying a title when a display of the title for an item on the lower layer is erased (N. B. : this operation will be called "open a tree" hereinafter).

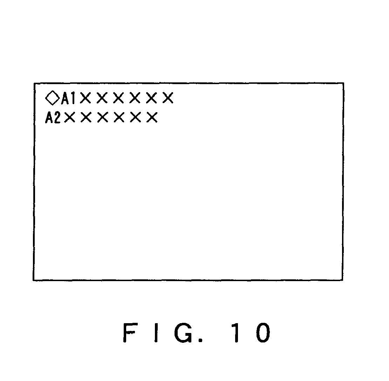

Fig. 10 exemplifies a screen in a state of closing entire tree display of a table of contents exemplified by Fig. 7 which shows only the titles for items "A1" and "A2" on the highest hierarchical layer among the displayed titles displayed as a table of contents shown by Fig. 7.

The processing shown by Fig. 9 is started under a state in which one of the titles displayed as a table of contents in the content table display area 21 of the electronic manual display screen as exemplified by Fig. 3 is selected as a result of the user operating a mouse, et cetera, comprised by the input unit 15, followed by the user clicking the icon indicated as "table of contents" in the navigation area 23 for example.

First processing is to judge whether or not the content table display area 21 of the electronic manual display screen displays currently a title for an item on a lower layer than the items associated with the titles selected as described above (S301) and, if the title of the item on the lower layer is judged to be displayed (i.e., "yes" for the judgment), the processing is for closing a tree, that is, erasing all the displayed lines related to the items on the lower layer(s) and moving the remaining display lines upwards by the number of the erased lines (S302), followed by proceeding to the processing of 5309. On the other hand, if it is judged that a title of an item on the lower layer is not displayed (i.e., "no" for the judgment), proceed to S303 for the processing of opening a tree.

Then the processing is to obtain hierarchical information 31 displayed with the currently selected title being related to from the display in the content table display area 21 (S303).

Then the processing is to read and obtain an electronic manual data file (S304), followed by searching for hierarchical information 31 in the storage area next to the one for the item attached by the hierarchical information 31 obtained by the processing of S303 within the storage area of the obtained electronic manual data file (S305).

Then the processing is to judge whether or not the search in the immediate prior processing has found hierarchical information 31 in the electronic manual data file (S306) and, if the judgment is "found" (i.e., "yes" for the judgment, proceed to the processing of S307, or proceed to the S308 if the judgment is "not yet found" (i.e., "no" for the judgment).

In the subsequent steps, the processing is to display one horizontal line in the display of a table of contents exemplified by Fig. 7 by carrying out the processing of S105 through S112 in the manual initial display processing shown by Fig. 6 (S307), and the processing goes back to S306 for repeating the above described processing.

The next processing is to judge whether or not a search for hierarchical information 31 is done to the items on the same layer as the hierarchical information 31 obtained by the first processing S303 of this series thereof (S308) and, if such a search is judged to be complete (i.e., "yes" for the judgment), proceed to the processing of S309. On the other hand, if such a search is judged to be not yet complete (i.e., "no" for the judgment), goes back to the processing of S306 to repeat the above described processing.

The next is to read a body text data 33 for an item attached by the hierarchical information 31 obtained by the processing of the earlier step S303 on this series thereof out of the electronic manual data file and have the body text display area 22 of the electronic manual display screen display the body text data 33 for the item (S309). Then the hierarchical layer display open-close processing ends.

The above described processing is the hierarchical layer display open-close processing.

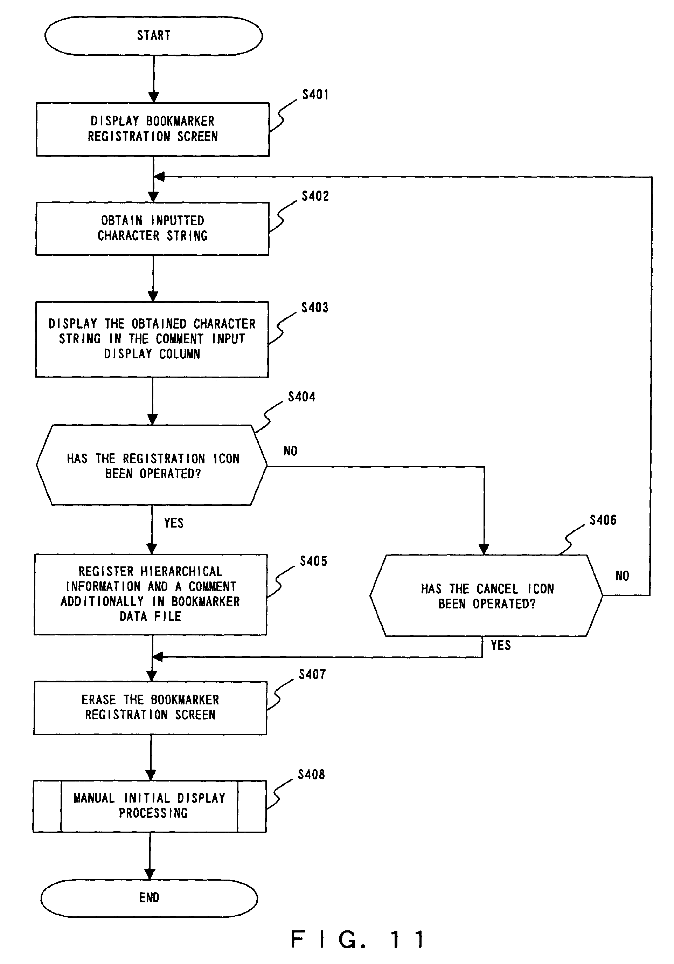

The next description is about Fig. 11 which shows a flow chart describing a processing content of bookmarker registration processing. This processing is for inserting a bookmarker in an electronic manual anew, and more specifically for registering information about the new bookmarker in the bookmarker data file exemplified by Fig. 5.

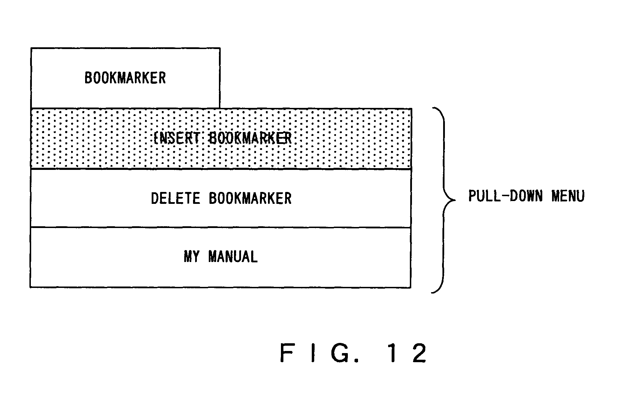

The processing shown by Fig. 11 is started under the state in which one of the titles displayed as a table of contents in the content table display area 21 of the electronic manual display screen as exemplified by Fig. 3 is selected as a result of the user operating a mouse, et cetera, comprised by the input unit 15, followed by clicking the icon indicated as "bookmarker" in the navigation area 23 to show a pull-down menu for operating instruction about a bookmarker as exemplified by Fig. 12 and then clicking the item "insert a bookmarker" in the pull-down menu.

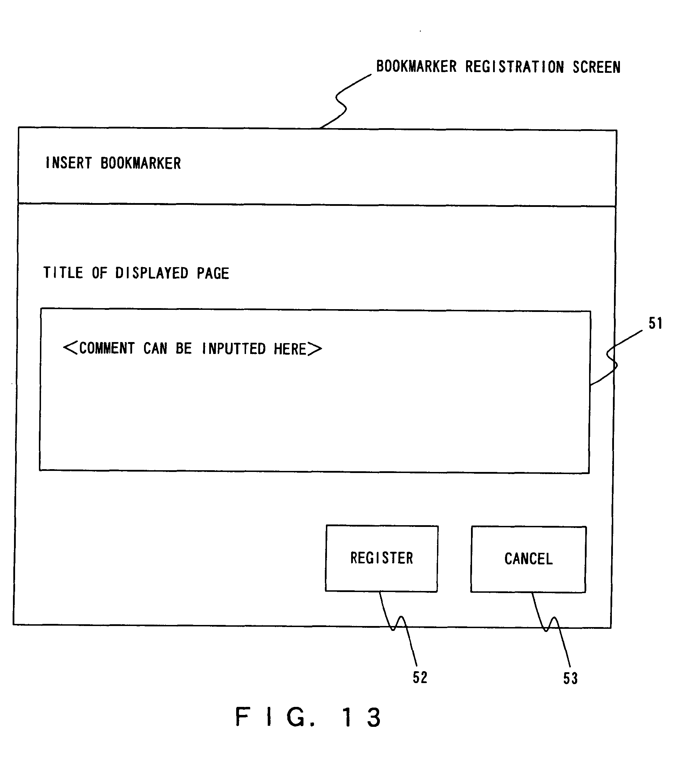

The first processing is to have the output unit 16 display a bookmarker registration display screen which is exemplified by Fig. 13 (S401). This screen comprises a comment input display column 51 for displaying a comment text according to the user operating the input unit 15, a registration icon 52 for being pressed for operation for instructing a bookmarker registration and a cancel icon 53 for being pressed for operation for instructing a cancellation of bookmarker registration.

Back to the description of Fig. 11, now the processing is to obtain a character string inputted by operating in the input unit 15 (S402) and to have the output unit 16 display the obtained character string in the comment input display column 51 comprised by the bookmarker registration screen which is now displaying (S403).

The next process is to judge whether or not the registration icon 52 has been pressed for operation by operating the input unit 15 (S404) and, if it is judged to have been pressed (i.e., "yes" for the judgment), the processing is to register hierarchical information 41 and a comment data 42, both about a bookmarker, additionally in the bookmarker data file stored by the HDD 14 (S405), where the hierarchical information 41 is defined as the hierarchical information 31 displayed in relation with the title selected by the content table display area 21 of the electronic manual display screen at the time of starting the bookmarker registration screen, while the comment data 42 is defined as a character string data for expressing the character string displayed in the comment input display column 51. Note that, here, if a bookmarker data file is not stored by the HDD 14, a bookmarker data file will be created anew and a bookmarker will be registered therein followed by storing in the HDD 14.

On the other hand, if the judgment for S404 judges that the registration icon 52 is not pressed for operation (i.e., "no" for the judgment), the processing is to judge whether or not the cancel icon 53 has been pressed for operation (S406) and, if the judgment is "pressed" (i. e. , "yes" for the judgment), the processing proceeds to S407, while the processing proceeds to S402 for repeating the above described processing, if the judgment is "not pressed" (i.e., "no" for the judgment).

The next processing is to erase the bookmarker registration screen which has been displayed by the output unit 16 in the processing of S401 (S407), followed by carrying out the above described manual initial display processing shown by Fig. 6 (S408), further followed by ending the processing of Fig. 11. Incidentally, in the manual initial display processing carried out in the S408, the processing of S114 shown by Fig. 6 displays the text for the title selected in the content table display area 21 of the electronic manual display screen at the time of starting the bookmarker registration processing, instead of displaying the text for the item to which the title is displayed at the head of a table of contents display.

The above processing is the bookmarker registration processing.

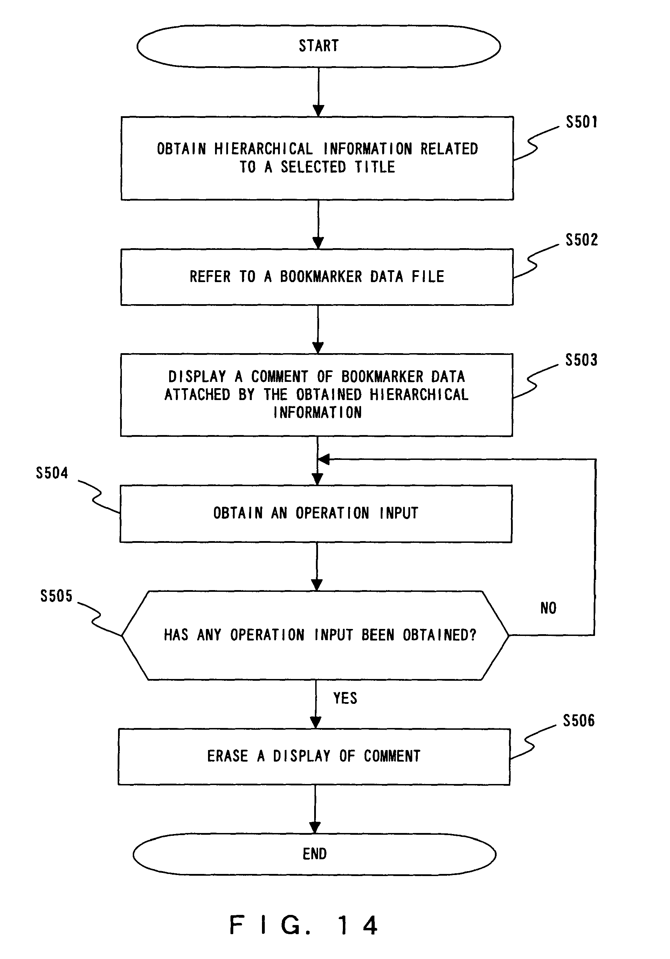

The next description is about Fig. 14 which shows a flow chart describing a processing content of comment display processing. This processing is for displaying a comment attached to a bookmarker as a result of the above described processing.

The processing of Fig. 14 is started by the user operating a mouse, et cetera, comprised by the input unit 15 for example to have the content table display area 21 display titles as a table of contents, followed by clicking for selecting one of the titles among which a black diamond mark is attached for indicating that bookmarker information is related to.

The first processing is to obtain hierarchical information 31 selected as above described and displayed by relating to the title (S501).

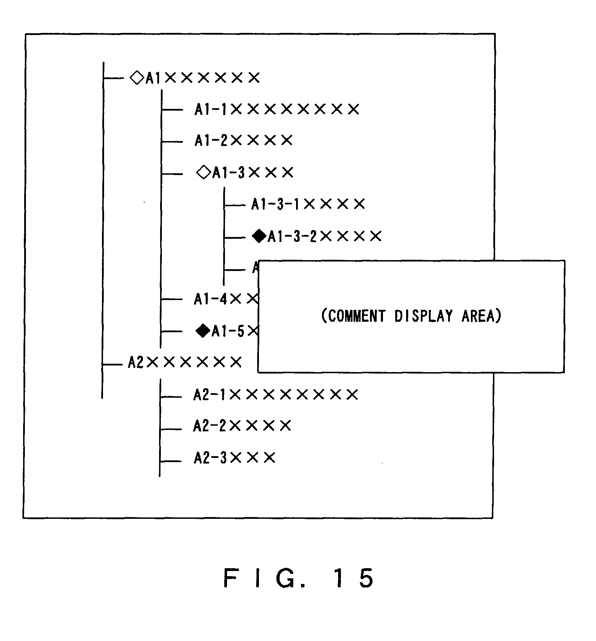

Next processing is to refer to a bookmarker data file exemplified by Fig. 5 (S502), followed by reading a comment data 42 in a bookmarker indicating the same hierarchical information 41 as the hierarchical information 31 obtained by the processing of S501 and having the output unit 16 display a comment text expressed by the aforementioned comment data 42 by overlapping with the content table display area 21 of the electronic manual display screen which is currently displaying as exemplified by Fig. 15 (S503).

Then obtain an input by the user operating the input unit 15 (S504) and judge whether or not any kind of operating input has been obtained (S505) and, if some input is judged to have been obtained (i.e., "yes" for the judgment), proceed to the processing of S506, or have the processing go back to S504 for repeating the obtainment processing for operating input if no operation input is judged to have been obtained (i.e., "no" for the judgment).

The subsequent processing is to erase the display of comment text displayed by the comment display area shown by Fig. 15 by the processing of S503 (S506), and end the comment display processing.

The above processing is the comment display processing which is carried out by the CPU 11 to make it possible to display a comment text added to a bookmarker when the content table display area 21 of the electronic manual display screen exemplified by Fig. 3 is displaying a table of contents display exemplified by Fig. 7, thereby providing a function of writing a comment text in the middle of a manual as if it were a manual on a paper media.

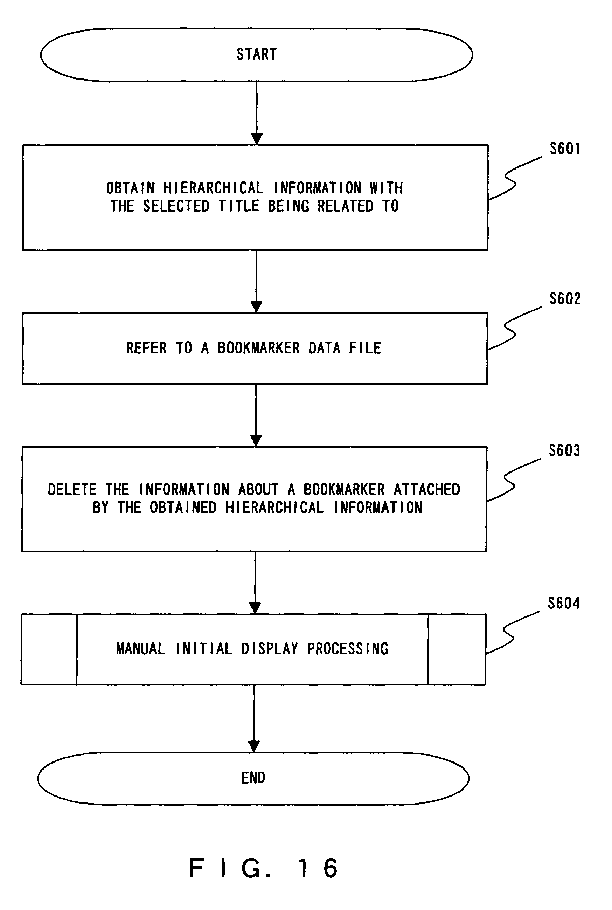

The next description is about Fig. 16 which shows a flow chart describing a processing content of bookmarker deletion processing. This processing is for removing a bookmarker inserted in an electronic manual and more specifically for removing registered bookmarker information from the bookmarker data file exemplified by Fig. 5.

The processing show by Fig. 16 is started under the state in which one of the titles displayed as a table of contents in the content table display area 21 of the electronic manual display screen as exemplified by Fig. 3 is selected as a result of the user operating a mouse, et cetera, comprised by the input unit 15, followed by the user clicking the icon indicated as "bookmarker" in the navigation area 23 to show a pull-down menu for operating instruction about a bookmarker as exemplified by Fig. 12 and then clicking the item "delete bookmarker" in the pull-down menu.

The first processing is to obtain hierarchical information 31 displayed with the title selected as described above being related thereto (S601).

The next processing is to refer to a bookmarker data file exemplified by Fig. 5 (S602), followed by deleting the information about a bookmarker (i.e., hierarchical information 41 and comment data 42) indicated by the same hierarchical information 41 as the hierarchical information 31 obtained by the processing of S601 (S603).

Then, follows the manual initial display processing described in association with Fig. 6 (S604), and thus ends the processing shown by Fig 16.

Such processing is the bookmarker deletion processing.

The next processing is about a display of My Manual.

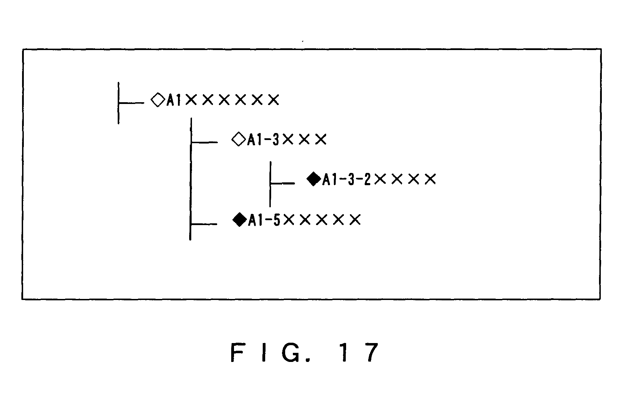

Let it define that a My Manual display is to have only an item attached by a bookmarker and title for the upper layer item of the item in the hierarchical structure from the electronic manual displayed, and in specific, a title attached by the above described black diamond or white diamond marks among a table of contents displayed in the content table display area 21 of the electronic manual display screen, as exemplified by Fig. 17, aiming at improving a convenience.

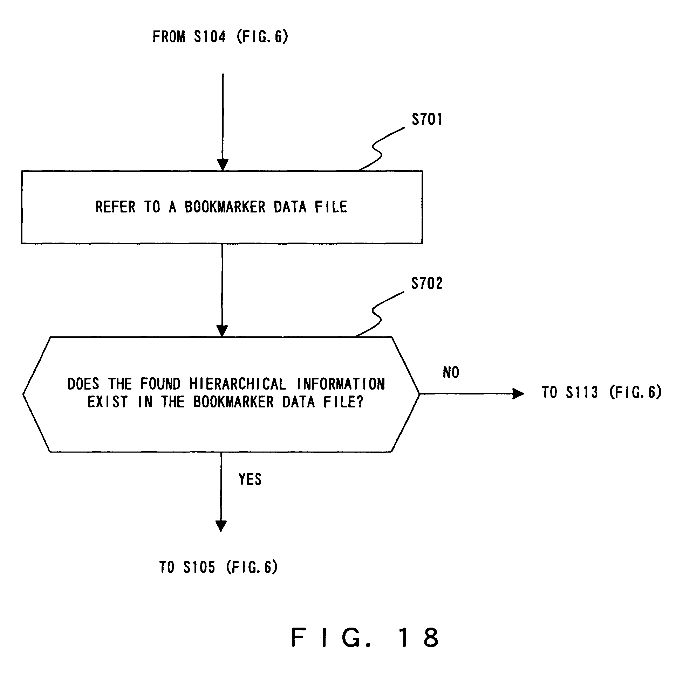

In order to have the electronic manual display apparatus shown by Fig. 1 display such My Manual, insert the processing shown by the flow chart of Fig. 18 between the processing S104 and S105 in the manual initial display processing shown by Fig. 6 so as to start the processing of the inserted Fig. 6 when obtaining a change instruction for a display of table of contents by the user instruction through operating the input unit 15 for instance.

Accordingly the description of Fig. 18 ensues.

Following S104 shown by Fig. 6 in which the judgment of having found the hierarchical information 31 in the electronic manual data file by the search conducted immediately before, the processing is to refer to the bookmarker data file exemplified by Fig. 5 (S701), followed by judging whether or not the same information as the found hierarchical information 31 exist in the bookmarker data file as hierarchical information 41 (S702) and, if the same information is judged to be existent (i.e. , "yes" for the judgment), proceed to the processing of S105 shown by Fig. 6. On the other hand, if the same information is judged to be nonexistent (i.e., "no" for the judgment), then proceed to the processing of S113 shown by Fig. 6 for processing of searching for a next hierarchical information 31 in the electronic manual data file.

The above described processing executed by the CPU 11, in addition to the processing shown by Fig. 6, displays only titles attached by either of the above described marks (i.e., black or white diamond marks) among the titles displayed as a table of contents in the content table display area 21 of the electronic manual display screen.

Note here that a comprisal of electronic manual display apparatus as an embodiment of the present invention by using a commonly configured computer is accomplished by creating a control program for making the computer carrying out the above described respective processing shown by Figs. 6, 8, 9, 11, 14, 16 and 18, having a computer readable storage medium store the control program and making the computer read it out thereof to execute.

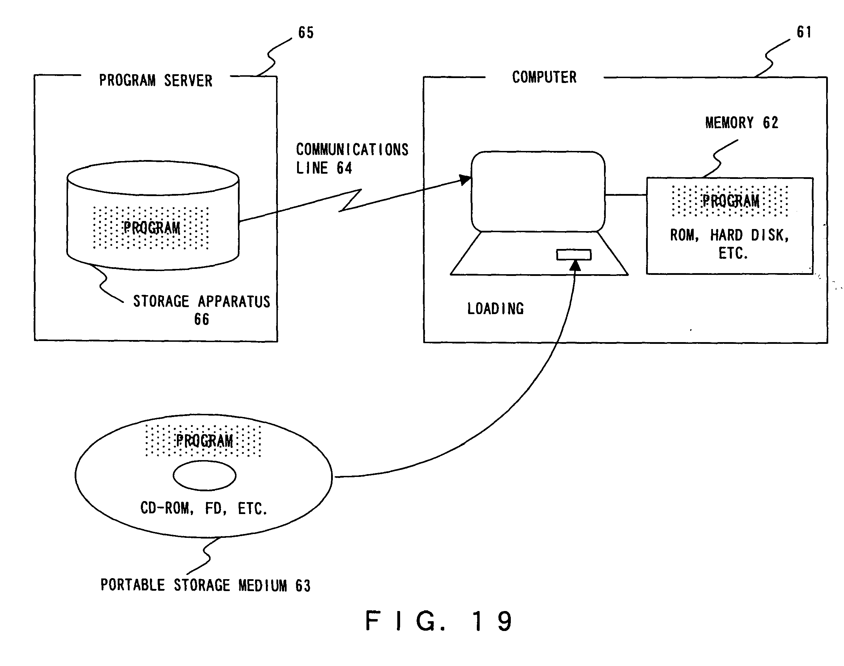

Fig. 19 exemplifies a storage medium allowing a computer reading the stored program. As shown by Fig. 19, the storage medium can utilize, for example, a memory 62 comprehending a ROM, RAM or hard disk apparatus comprised by a computer 61 as either a built-in or externally attached apparatus, or a portable storage medium 63 comprehending a flexible disk, MO, CD-ROM, DVD-ROM, et cetera.

A storage medium may be a storage apparatus 66 comprised by a computer having a function of program server 65 and connected with the computer 61 by way of a communications line 64. In this case, the comprisal is for the program server 65 to transmit a transmission signal obtained by modulating a data signal expressing the control program by way of the communications line 64 as the transmission medium to the computer 61 which in turn demodulates the received transmission signal for restoring the control program, thereby enabling an execution thereof.

Note here that the present invention is in no way limited by the above described embodiment, but is possible to improve or change in various ways within the scope of the present invention.

## Claims

1. An electronic manual display apparatus, being an apparatus for displaying an electronic manual made up of document data in which itemized texts are written, comprising:
contentstabledisplaymeans (1, 16) for displaying titles for respective items in the electronic manual as a table of contents; and
bookmarker display means (2, 16) for displaying a marker indicating a relationship of bookmarker information onto a title for an item to which the bookmarker information is related among titles displayed as the table of contents.

2. The electronic manual display apparatus according to claim 1, wherein
said contents table display means (1, 16) further displays a hierarchical layer relationship among respective titles displayed as said table of contents based on a hierarchical structure among said respective items defined in said electronic manual.

3. The electronic manual display apparatus according to claim 2, wherein
saidbookmarkerdisplaymeans (2, 16) displays said marker also onto a title for an item on an upper layer in said hierarchical structure among said titles displayed as said table of contents when an item on a lower layer of the hierarchical structure is related by bookmarker information.

4. The electronic manual display apparatus according to claim 3, wherein
said bookmarker display means (2, 16) changes a pattern of said marker for indicating a title for an item on an upper layer in said hierarchical structure from that of the one for indicating a title for an item on a lower layer in the hierarchical structure.

5. The electronic manual display apparatus according to claim 1, wherein
said bookmarker information includes a document data for indicating a comment, and
said bookmarker display means (2, 16) displays the comment together with a display of said table of contents.

6. The electronic manual display apparatus according to claim 1, further comprising
contents table change display means (16) for displaying only a title indicated by said marker among titles in accordance with an instruction for changing display of the titles as said table of contents.

7. A method for displaying an electronic manual made up of document data in which itemized texts are written, comprising:
displaying titles for respective items in the electronic manual as a table of contents (S111); and
displaying a marker indicating a relationship of bookmarker information onto a title for an item to which the bookmarker information is related among titles displayed as the table of contents (S108).

8. The method according to claim 7, further comprising
displaying a hierarchical layer relationship among respective titles displayed as said table of contents based on a hierarchical structure among said respective items defined in said electronic manual, in addition to a display of said marker (S105).

9. The method according to claim 8, further comprising
displaying said marker also onto a title for an item on an upper layer in said hierarchical structure among said titles displayed as said table of contents, in addition to a display of said marker when an item on a lower layer of the hierarchical structure is related by bookmarker information (S110).

10. The method according to claim 9, further comprising
changing a pattern of said marker for indicating a title for an item on an upper layer in said hierarchical structure (S110) from that of the one for indicating a title for an item on a lower layer in the hierarchical structure (S108).

11. The method according to claim 7, wherein
said bookmarker information includes a document data for indicating a comment, and
the comment, in addition to said marker, is displayed together with a display of said table of contents (S503).

12. The method according to claim 7, further comprising
displaying only a title indicated by said marker among titles in accordance with an instruction for changing display of the titles as said table of contents (S702, S111).

13. A computer readable storage medium (63, 66) storing a program for making a computer (61) carry out a display of electronic manual made up of document data in which itemized texts are written, wherein
the program makes the computer (61) carry out
a content display processing for having a display unit display titles for respective items in the electronic manual as a table of contents; and
a bookmarker display processing for further displaying a marker indicating a relationship of bookmarker information onto a title for an item to which the bookmarker information is related among titles displayed as the table of contents.

14. The storage medium (63, 66) according to claim 13, wherein
said content display processing makes said computer (61) carry out the processing of further displaying a hierarchical layer relationship among respective titles displayed as said table of contents based on a hierarchical structure among said respective items defined in said electronic manual.

15. The storage medium (63, 66) according to claim 14, wherein
said bookmarker display processing makes said computer (61) carry out the processing of displaying said marker also onto a title for an item on an upper layer in said hierarchical structure among said titles displayed as said table of contents when an item on a lower layer of the hierarchical structure is related by bookmarker information.

16. The storage medium (63, 66) according to claim 15, wherein
said bookmarker display processing changes a pattern of said marker for indicating a title for an item on an upper layer in said hierarchical structure from that of the one for indicating a title for an item on a lower layer in the hierarchical structure.

17. The storage medium (63, 66) according to claim 13, wherein
said bookmarker information includes a document data for indicating a comment, and
said bookmarker display processing makes the computer carry out the processing of
displaying the comment together with a display of said table of contents.

18. The storage medium (63, 66) according to claim 13, wherein
said program makes the computer carry out the contents table change display processing for displaying only a title indicated by said marker among titles in accordance with an instruction for changing display of the titles as said table of contents.
